**Europäisches Patentamt**

**European Patent Office**

**Office européen des brevets**

(11) Veröffentlichungsnummer : **0 334 029 B1**

(12) **EUROPÄISCHE PATENTSCHRIFT**

(45) Veröffentlichungstag der Patentschrift :
**26.08.92 Patentblatt 92/35**

(21) Anmeldenummer : **89102950.6**

(22) Anmeldetag : **21.02.89**

(51) Int. Cl.⁵ : **B60T 8/36,** B60T 13/68,
F16K 31/06

(54) **Elektrisch steuerbares Ventil.**

(30) Priorität : **23.03.88 DE 3809742**

(43) Veröffentlichungstag der Anmeldung :
**27.09.89 Patentblatt 89/39**

(45) Bekanntmachung des Hinweises auf die
Patenterteilung :
**26.08.92 Patentblatt 92/35**

(84) Benannte Vertragsstaaten :
**DE FR GB IT SE**

(56) Entgegenhaltungen :
**EP-A- 0 097 545**
**DE-A- 2 363 406**

(56) Entgegenhaltungen :
**DE-A- 2 403 523**
**DE-A- 2 647 072**
**DE-A- 2 711 140**
**DE-B- 1 179 068**
**DE-U- 8 703 841**
**US-A- 3 989 063**

(73) Patentinhaber : **ROBERT BOSCH GMBH**
**Postfach 30 02 20**
**W-7000 Stuttgart 30 (DE)**

(72) Erfinder : **Käs, Günter**
**Markelsheimer Strasse 70**
**W-7000 Stuttgart 40 (DE)**
Erfinder : **Stegmaier, Alwin**
**Breslauer Strasse 3**
**W-7141 Schwieberdingen (DE)**

**Beschreibung**

Stand der Technik

Die Erfindung geht aus von einem Ventil nach der Gattung des Hauptanspruchs. Ein durch die US-PS 3 989 063 bekanntes Ventil besitzt einen stufenartig hohlgebohrten Anker, in den aufeinanderfolgend Anschlagringe und Distanzringe eingelegt und durch Verstemmen fixiert sind. Zwei Verschlußelementhalter befinden sich verschiebbar innerhalb der Distanzringe zwischen den Anschlagringen. Die Beweglichkeit der Verschlußelementhalter in axialer Richtung des Ankers wird von den Anschlagringen begrenzt. Die zwischen den Verschlußelementhaltern befindliche Ventilschließfeder ist mit Vorspannung eingebaut. Ebenso ist auch die Ankerrückstellfeder mit Vorspannung eingebaut. Bei vorgegebenen Ankerkräften für eine Ankermittelstellung und eine Ankerendstellung müssen die Kräfte der vorgespannten Federn in einem geeigneten Verhältnis zueinander und zu den Magnetkräften stehen. Infolge unvermeidlicher Herstellungstoleranzen weicht das Verhältnis der Federkräfte oft in nachteiliger Weise vom günstigsten Wert ab. In solchen Fällen wird durch Austauschen der genannten Ringe gegen andere mit anderen Höhenabmessungen letztlich ein geeignetes Verhältnis der Kräfte der vorgespannten Federn eingestellt. Das Austauschen der Ringe benötigt viel Zeit und verteuert deshalb das Ventil in nachteiliger Weise. Weil die Ankerrückstellfeder an einer Durchmesserstufe des hohlen Ankers angreift, ist die Herstellung dieses Bereichs des Ankers aufwendig und teuer.

Durch die EP-A-0 097 545 ist ein Sicherheitsventil mit einem Gehäuse und einer einzigen Feder, die ein Verschlußstück gegen einen Ventilsitz drückt, bekannt. Damit beim Zusammenbauen des Sicherheitsventils die Vorspannung der einzigen Feder eingestellt werden kann, ist eine besondere, die Vorspannung der Feder aufrechterhaltende Einrichtung vorgesehen. Diese Einrichtung hat einen inneren hutartigen Teil zur Aufnahme eines Endes der einzigen Feder, einen radial auswärts sich anschließenden krempenartigen Teil und noch einen rohrartig aufwärts gerichteten Randteil, der im Reibkontakt mit einer Gehäusebohrung die gewollte Vorspannung aufrechterhält. Das Einstellen der Vorspannung erfolgt durch Einpressen der Einrichtung in die Gehäusebohrung bis zu einer hierfür individuell geeigneten Tiefe. Dieses Element ist aufgrund seiner komplizierten Form teuer herstellbar. Des weiteren benötigt diese Einrichtung viel Einbauraum, wodurch der Einbau in andere Ventile erschwert wird.

Vorteile der Erfindung

Das erfindungsgemäße Ventil mit den kennzeichnenden Merkmalen des Anspruchs 1 hat demgegenüber den Vorteil, daß ohne Austausch von Ringen oder dergleichen die Kräfte der vorgespannten Federn in ein geeignetes Verhältnis bringbar sind, wobei die wesentlichen Abmessungen des Ankers weitgehend beibehalten werden und eine preisgünstige Herstellbarkeit gewährleistet ist. Das Einstellen einer günstigen Federvorspannung ist dabei durch Verschieben des beanspruchten Elements durchführbar. Das Verschieben des Elements kann beispielsweise mittels einer von Hand betätigbaren Spindelpresse durchgeführt werden.

Die kennzeichnenden Merkmale des Anspruchs 1 haben des weiteren den Vorteil, daß das Element raumsparend innerhalb des Ankers unterbringbar ist, so daß der Anker einen für das Erzeugen ausreichend großer Kräfte günstigen Querschnitt hat.

Die kennzeichnenden Merkmale des Anspruchs 1 haben außerdem noch den Vorteil, daß das Element, das eine Anschlagschulter für einen Verschlußstückhalter zur Verfügung stellt, aus einem dünnwandigen Rohr herstellbar ist und deshalb besonders wenig Bauraum beansprucht und zusätzlich noch einen Anschlag für die zweite Feder bildet. Hierdurch ist eine seither übliche Durchmesserstufe im Anker eingespart.

Durch die in den Unteransprüchen aufgeführten Maßnahmen sind vorteilhafte Weiterbildungen und Verbesserungen des im Hauptanspruch angegebenen Ventils möglich.

Die kennzeichnenden Merkmale des Anspruchs 2 geben ein alternatives Ausführungsbeispiel an, das ebenfalls sehr raumsparend ausgebildet und preisgünstig herstellbar ist. Die Weiterbildung mit den kennzeichnenden Merkmalen des Anspruchs 3 bildet das zur Einstellung der Federvorspannung bestimmte Element weiter zu einem Zentriermittel für ein Ende einer einzubauenden Feder.

Die kennzeichnenden Merkmale des Anspruchs 4 geben ein Ausführungsbeispiel an, das einerseits in günstiger Weise herstellbar ist und andererseits eine gewünschte exakte Ausrichtung der Anschlagschulter innerhalb des Ankers sicherstellt.

Die Weiterbildung mit den kennzeichnenden Merkmalen des Anspruchs 5 ergibt eine preisgünstige Weiterbildung durch Verwendung zweier rohrartiger Elemente, die gleiche Nenndurchmesser besitzen.

Zeichnung

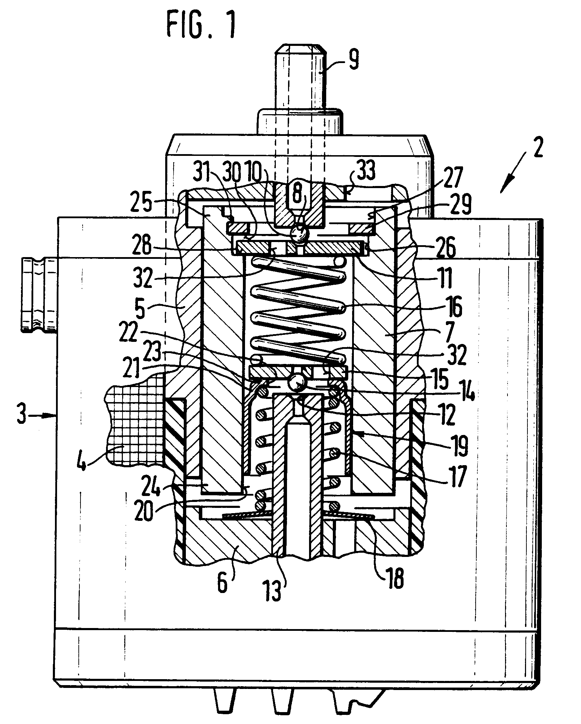

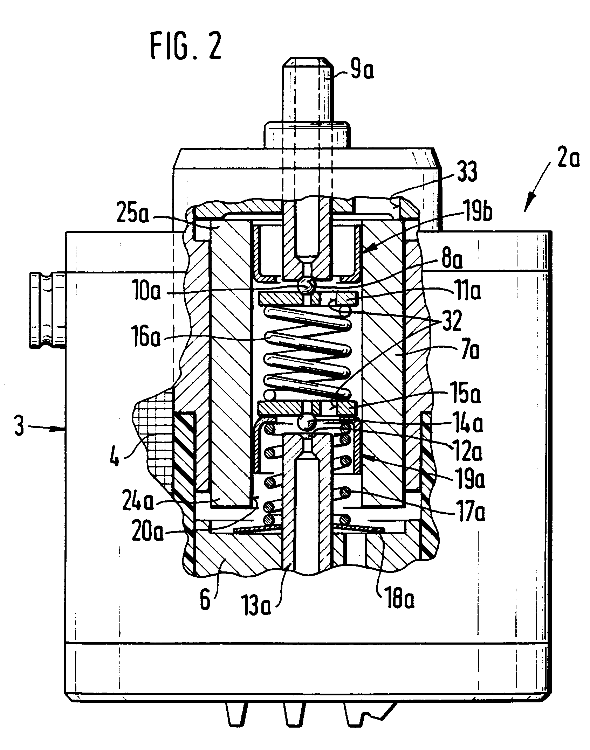

Zwei Ausführungsbeispiele der Erfindung sind in der Zeichnung dargestellt und in der nachfolgenden Beschreibung näher erläutert. Es zeigen Figur 1 ein erstes Ausführungsbeispiel der Erfindung im Längsschnitt und Figur 2 ein zweites Ausführungsbeispiel des erfindungsgemäßen Ventils ebenfalls im Längsschnitt.

Beschreibung der Ausführungsbeispiele

Das erfindungsgemäße Ventil 2 nach der Figur 1 hat einen Elektromagnet 3 mit einer Spule 4, mit einem magnetischen Rückschluß 5 und einem Polstück 6, einen Anker 7, einen ersten Ventilsitz 8 mit einem Anschlußrohr 9, ein erstes Verschlußstück 10, einen ersten Verschlußstückhalter 11, einen zweiten Ventilsitz 12 mit einem Anschlußrohr 13, ein zweites Verschlußstück 14, einen Verschlußstückhalter 15, eine Ventilschließfeder 16, eine erste Ankerrückstellfeder 17 und eine zweite Ankerrückstellfeder 18 sowie ein im Anker 7 angeordnetes Element 19.

Der Elektromagnet 3, seine Spule 4, der magnetische Rückschluß 5 und das Polstück 6 sind in zum Stand der Technik gehörender Weise ausgebildet. Ein Beispiel hierfür gibt die US-PS 3 989 063 an.

Der Anker 7 hat im Bereich des zweiten Ventilsitzes 12 eine zylindrische Bohrung 20 zur Aufnahme des Elements 19. Dieses Element 19 ist vorzugsweise nach Art eines dünnwandigen Rohres ausgebildet und weist an einem Ende eine Einschnürung 21 und einen radial einwärts gerichteten Bord 22 auf. Dieser Bord 22 dient als eine Anschlagschulter 23 für den zweiten Verschlußstückhalter 15. Das zweite Anschlußrohr 13 geht von dem Polstück 6 aus und ragt in den Anker 7 und in das Element 19 hinein. Die zweite Ankerrückstellfeder 18 ist nach Art einer Tellerfeder ausgebildet, umgibt das zweite Anschlußrohr 13 und liegt auf dem Polstück 6 auf. Ein Ende 24 des Ankers 7 ist gegen die zweite Ankerrückstellfeder 18 gerichtet. Zwischen diese zweite Ankerrückstellfeder 18 und den Bord 22 ist die erste Ankerrückstellfeder 17 eingesetzt, wobei die Einschnürung 21 zum Zentrieren der ersten Ankerrückstellfeder 17 dient.

Am gegenüberliegenden Ende 25 des Ankers 7 weist dieser Bohrungsstufen 26 und 27 auf. Dabei bildet die tiefer liegende Bohrungsstufe 26 eine Anschlagschulter 28 für den ersten Verschlußstückhalter 11. In die Stufenbohrung 27 ist ein Anschlagring 29 eingesetzt, der eine gegen den ersten Verschlußstückhalter 11 gerichtete zusätzliche Anschlagschulter 30 bildet. Innerhalb der Stufenbohrung 27 ist der Anschlagring 29 mittels Verstemmungen 31 gesichert. Die Anschlagschultern 28 und 30 haben einen solchen Abstand, daß der erste Verschlußstückhalter 11 in axialer Richtung des Ankers 7 ein Stück weit axial beweglich ist. Zwischen dem ersten Verschlußstückhalter 11 und dem zweiten Verschlußstückhalter 15 befindet sich die mit Vorspannung eingebaute Ventilschließfeder 16. Die Ventilschließfeder 16 belastet den zweiten Verschlußstückhalter 15 in Richtung zu dem Element 19. Die Verschlußstücke 10 und 14 sind vorzugsweise in Form von Kugeln ausgebildet, die der Ventilschließfeder 16 gegenüberliegend mit dem jeweiligen Verschlußstückhalter 11 bzw. 15 fest verbunden sind. Dabei sind die Verschlußstücke 10 und 14 zu den Ventilsitzen 8 und 12 ausgerichtet. Sowohl der erste Verschlußstückhalter 11 als auch der zweite Verschlußstückhalter 15 sind in ausreichendem Maß innerhalb des Ankers 7 radial beweglich angeordnet, so daß eine exakte Ausrichtung der Verschlußstücke 10 bzw. 14 zu ihrem jeweiligen Ventilsitz 8 bzw. 12 zum Zwecke einer guten Abdichtung möglich ist. Durch Anordnen von Löchern 32 sind die Verschlußstückhalter 11 und 15 in Längsrichtung des Ankers 7 durchströmbar.

Das erfindungsgemäße Ventil 2 ist im stromlosen Zustand der Spule 4 dargestellt. Infolgedessen verschieben die erste Ankerrückstellfeder 17 und die zweite Ankerrückstellfeder 18 über den Bord 22 und das Element 19 den Anker 7 in Richtung zum ersten Ventilsitz 8, bis nach dem Auftreffen des ersten Verschlußstücks 10 auf dem ersten Ventilsitz 8 die Ventilschließfeder 16 so weit zusammengedrückt ist, daß der erste Verschlußstückhalter 15 an der Anschlagschulter 28 des Anker 7 anliegt. Dadurch ist das erste Anschlußrohr 9 relativ zum zweiten Anschlußrohr 13 und einem zum Anker 7 hin offenen Anschlußloch 33 abgesperrt.

Wird die Spule 4 mit einer ersten Stromstärke erregt, so bilden sich zwischen dem Polstück 6 und dem Ende 24 des Ankers 7 Anzugskräfte aus, die bei kleiner werdendem Abstand zwischen dem Ende 24 und dem Polstück 6 anwachsen. Diese Kräfte bewirken eine Verschiebung des Ankers 7 in Richtung des Polstücks 6, wobei die erste Ankerrückstellfeder 17 und auch die zweite Ankerrückstellfeder 18 über das Maß ihrer ursprünglichen Vorspannung hinaus etwas zusammengedrückt werden. Dabei wirkt die Ventilschließfeder 16, weil sie sich über den ersten Verschlußstückhalter 11 und das erste Verschlußstück 10 am ersten Ventilsitz 8 abstützt, im Sinne der Anzugskräfte die das Polstück 6 auf den Anker 7 ausübt. Dadurch verschiebt sich der Anker 7 solange, bis das Verschlußstück 14 auf den Ventilsitz 12 auftrifft und diesen verschließt. Ab diesem Zeitpunkt wirkt die Ventilschließfeder 16 als sogenannte Barrierefeder mit der Folge, daß der Anker 7 zum Stillstand kommt und die Ventilsitze 8 und 12 geschlossen sind. Deshalb kann sich weder zwischen dem ersten Ventilsitz 8 und dem Anschlußloch 32 noch zwischen dem zweiten Ventilsitz 12 und dem Anschlußloch 32 eine Druckmittelströmung ausbilden.

Wird die Spule 4 mit einer zweiten Stromstärke, die größer als die erste ist, erregt, bewegt der Anker 7 über den Anschlag 29 den ersten Verschlußstückhalter 11 mitsamt dem ersten Verschlußstück 10 weg von dem ersten Ventilsitz 8. Dadurch entsteht in gewünschter Weise eine Strömungsverbindung zwischen dem ersten Ventilsitz 8 und dem Anschlußloch 33.

Wie aus der Beschreibung leicht ableitbar ist, müssen die Steifigkeiten der Federn 16, 17 und 18 und auch deren Vorspannungen nach dem Einbau in das erfindungsgemäße Ventil 2 richtig aufeinander abgestimmt sein. Weil aber die Federsteifigkeiten durch fertigungsbedingte Zufälle innerhalb von Toleranzbereichen streuen, und weil auch die in Achsrichtung zu messenden Abmessungen der Federn 16, 17 und 18 im noch nicht eingebauten Zustand Toleranzen unterliegen, muß dafür gesorgt werden, daß bei denjenigen Zusammendrückungen der Federn, die den beschriebenen Stellungen der Ventilverschlußstücke 10 und 14 zugeordnet sind, ein günstiges Verhältnis der Kraft der Feder 16 zu denjenigen der Federn 17 und 18 besteht. Hier setzt die Erfindung an durch die Anordnung des bereits erwähnten Elements 19, das sich in der zylindrischen Bohrung 20 befindet. Das Element 19 hat im noch nicht eingebauten Zustand einen äußeren Durchmesser, der großer ist als die lichte Weite der zylindrischen Bohrung 20. Beim Einbauen des Elements 19 in die zylindrische Bohrung 20 verringert sich der äußere Durchmesser des Elements 19, wodurch sich zwischen dem Element 19 und der zylindrischen Bohrung 20 Druckkräfte und demzufolge Reibungskräfte ausbilden, die einer Verschiebung des Elements 19 innerhalb der zylindrischen Bohrung 20 entgegenwirken. Die Abmessungen des Elements 19 sind so gewählt, daß dieses Element 19 zwar beim Zusammenbauen in Längsrichtung der zylindrischen Bohrung 20 verschoben werden kann, daß aber eine Verschiebung des Elements 19 infolge Belastung durch die Federn 16, 17 und 18 sowie infolge von beim Bewegen des Ankers 7 auftretenden Erschütterungen ausgeschlossen ist. Es ist leicht ersichtlich, daß durch eine Verschiebung des Elements 19 in Richtung des Anschlagrings 29 die Ventilschließfeder 16 zunehmend mehr vorgespannt werden kann, und daß andererseits bei vorgegebener Länge der ersten Ankerrückstellfeder 17 dadurch deren Vorspannung kleiner ausfallen wird. Infolgedessen bilden das Element 19 und der Anker 7 mit seiner zylindrischen Bohrung 20 eine stufenlos verstellbare Einrichtung zum Einstellen der Vorspannungen von Federn und dadurch zur Abstimmung der Vorspannungen auf ein Verhältnis, das einen störungsfreien Betrieb des erfindungsgemäßen Ventils 2 bei zwei unterschiedlichen Erregungsstufen der Spule 14 sicher stellt. Die Einrichtung ist besonders preiswert, weil der vorhandene Reibschluß zwischen dem Element 19 und der zylindrischen Bohrung 20 zusätzliche Sicherungselemente überflüssig macht. Des weiteren hat die Einrichtung den Vorteil, daß durch Verwendung von Elementen mit ausgedehnten glatten Oberflächen beim Zusammenbauen keine Späne erzeugt werden, die zu einer Verschmutzung des zu steuernden Druckmittels und zur Beschädigung von Vorrichtungen führen, die mit dem Druckmittel beaufschlagt werden.

Das rohrartige Element 19 kann beispielsweise durch spanabhebende Bearbeitung aus einem relativ dickwandigen Rohr hergestellt werden. Zur Kosteneinsparung ist es jedoch zweckmäßiger, beispielsweise eine Anschlagschulter 23 durch Bördeln eines dünnwandigen Rohrstücks zu erzeugen. Des weiteren ist dann auch die Einschnürung 21 durch Verengen des Rohres erzeugbar. Wenn die Höhe des Elements 19 etwa nur halb so groß wie dessen Durchmesser gewählt wird, ist es vorteilhafter, das Element 19 durch Tiefziehen herzustellen. Hierbei kann eine Konizität, die beim Tiefziehen entsteht, in vorteilhafter Weise zum Einführen des Elements 19 in die zylindrische Bohrung 20 genutzt werden.

Das zweite Ausführungsbeispiel nach der Figur 2 des erfindungsgemäßen Ventils 2a unterscheidet sich vom ersten Ausführungsbeispiel hauptsächlich durch einen anders ausgebildeten Anker 7a. Dieser Anker 7a ist auf seiner gesamten Länge zylindrisch ausgebildet, so daß sich eine zylindrische Bohrung 20a zwischen dessen Enden 24a und 25a erstreckt. Ein erster Verschlußstückhalter 11a und ein zweiter Verschlußstückhalter 15a finden innerhalb dieser zylindrischen Bohrung 20a mit Radialspiel Platz. Eine Ventilschließfeder 16a ist ebenfalls wieder zwischen die Verschlußstückhalter 11a und 15a eingebaut. Es sind wiederum Ankerrückstellfedern 17a und 18a vorgesehen. Ein dem Element 19 des ersten Ausführungsbeispiels entsprechendes Element 19a ist einfach ausgebildet, denn es wurde die Einschnürung 21 des ersten Ausführungsbeispiels weggelassen. Als Ersatz für den Anschlagring 29 mit der Anschlagschulter 30 des ersten Ausführungsbeispiels ist in den Anker 7a ein zweites Element 19b eingebaut, das beispielsweise die gleichen Abmessungen wie das Element 19a haben kann. Den Verschlußstückhaltern 11a und 15a sind wiederum Verschlußstücke 10a und 14a zugeordnet, zu denen Ventilsitze 8a und 12a gehören.

Wie beim Vergleichen der Figuren 1 und 2 leicht erkennbar ist, ist das Ausführungsbeispiel gemäß der Figur 2 billiger herstellbar. Durch Anordnung des zweiten Elements 19b im Bereich des ersten Verschlußstückhalters 11a besteht eine zusätzliche Einstellmöglichkeit für die Vorspannung wenigstens einer Feder, d.h. es können nunmehr zunächst die Ankerrückstellfeder 17a mit dem Element 19a und darüber hinaus die Ventilschließfeder 16a mit dem Element 19b justiert werden.

Der Erfindungsgedanke wurde erläutert anhand zweier sogenannter 3/3-Ventile 2 und 2a, die in ihren Mittelstellungen Verbindungen zwischen allen ihren drei Anschlüssen unterbrechen. Selbstverständlich kann der Erfindungsgedanke auch verwendet werden bei Ventilen, die anders als die dargestellten Ausführungsbeispiele aufgebaut sind. So sind beispielsweise die Elemente 19, 19a und 19b sinngemäß weiterverwendbar in Ventilen mit beispielsweise zwei oder gar vier Stellungen, in denen das Abstimmen der Federkräfte aufeinander noch wichtiger ist.

Anstelle der Elemente 19, 19a und 19b mit zylindrischem Umfang könnten natürlich auch andere Elemente verwendet werden, die sich innerhalb einer Bohrung unter Überwindung von Reibschluß verschieben lassen. Solche Elemente können beispielsweise geschlitzte Ringe oder geschlitzte Rohrstücke sein. Auch sternförmig ausgebildete Elemente mit gegen die zylindrische Bohrung 20 oder 20a gerichteten Reibflächen wären einbaubar.

Das erfindungsgemäße Ventil ist vorteilhaft anwendbar in Fahrzeugbremsanlagen und in deren Blockierschutzeinrichtungen. Das erfindungsgemäße Ventile ist darüber hinaus auch geeignet zur Verwendung in Fahrzeugniveauregeleinrichtungen sowie Kupplungs- und Getriebesteuerungen.

## Patentansprüche

1. Ventil (2, 2a) mit einem Elektromagnet (4), mit einem in dessen Längsachse beweglich ausgerichteten Anker (7, 7a), der auf seiner ganzen Länge hohl gebohrt ist, mit einem ersten gleichachsig zum Anker (7, 7a) ausgerichteten Ventilsitz (8) sowie einem ersten zugeordneten Verschlußstück (10, 10a) und mit einem ersten Verschlußstückhalter (11, 11a), der in Längsrichtung des Elektromagnets (4) mittels des Ankers (7, 7a) bewegbar ist, mit einem zweiten Ventilsitz (12, 12a) sowie einem zweiten zugeordneten Verschlußstück (14, 14a) und mit einem zweiten Verschlußstückhalter (15, 15a), der ebenfalls in Längsrichtung des Elektromagnets (4) mittels des Ankers (7, 7a) bewegbar ist, mit einer mit Vorspannung eingebauten Ventilschließfeder (16 bzw. 16a) zwischen den Verschlußstückhaltern (11, 15 bzw. 11a, 15a), mit einer Einrichtung (19, 19a bzw. 19b), die die Vorspannung der Ventilschließfeder (16 bzw. 16a) aufrechterhält, und mit wenigstens einer vorgespannten Ankerrückstellfeder (17, 18), die in eine in dessen Längsrichtung verlaufende zylindrische Bohrung (20 bzw. 20a) des Ankers (7, 7a) ragt, dadurch gekennzeichnet, daß die Einrichtung (19, 19a bzw. 19b) aus einem in dieser Bohrung (20 bzw. 20a) des Ankers (7, 7a) unter Überwindung von Reibschluß einstellbar verschiebbaren Element (19, 19a bzw. 19b) besteht, das im wesentlichen rohrartig ausgebildet ist und an einem Ende einen radial einwärts gerichteten Bord (22) hat, der einerseits eine Anschlagschulter (23) für den von der Ventilschließfeder (16 bzw. 16a) belasteten Verschlußstückhalter (15) bildet und andererseits ein Anschlag ist für ein Ende der Ankerrückstellfeder (17).

2. Ventil nach Anspruch 1, dadurch gekennzeichnet, daß das Element (19, 19a bzw. 19b) als ein Tiefziehteil ausgebildet ist.

3. Ventil nach Anspruch 1 oder 2, dadurch gekennzeichnet, daß das Element (19) im Bereich der Anschlagschulter (23) eine Einschnürung (21) hat, in die ein Ende der Ankerrückstellfeder (17) eintaucht.

4. Ventil nach einem der Ansprüche 1 bis 3, dadurch gekennzeichnet, daß die Länge des rohrartigen Elements (19, 19a bzw. 19b) größer als die Hälfte seines Durchmessers ist.

5. Ventil nach Anspruch 1, dadurch gekennzeichnet, daß die zylindrische Bohrung (20) sich über die gesamte Länge des Ankers (7a) erstreckt, und daß ein zweites rohrartiges Element (19b) in den Anker (7a) so eingepreßt ist, daß sich beide Verschlußstückhalter (11a, 15a) mit der Ventilschließfeder (16a) zwischen den rohrartigen Elementen (19a, 19b) befinden.

## Claims

1. Valve (2, 2a) having an electromagnet (4), with an armature (7, 7a) which is aligned such that it can move in the longitudinal axis of said electromagnet and is drilled hollow over its entire length, having a first valve seat (8), aligned on the same axis as the armature (7, 7a), as well as a first associated closing piece (10, 10a), and having a first closing piece holder (11, 11a), which can be moved in the longitudinal direction of the electromagnet (4) by means of the armature (7, 7a), and having a second valve seat (12, 12a) as well as a second associated closing piece (14, 14a), and having a second closing piece holder (15, 15a), which can likewise be moved in the longitudinal direction of the electromagnet (4) by means of the armature (7, 7a), having a valve closing spring (16 or 16a), installed pretensioned, between the closing piece holders (11, 15 or 11a, 15a), and having a device (19, 19a or 19b) which maintains the pretensioning of the valve closing spring (16 or 16a), and having at least one pretensioned armature restoring spring (17, 18), which projects into a cylindrical hole (20 or 20a) of the armature (7, 7a) that runs in the longitudinal direction of the valve, characterised in that the device (19, 19a or 19b) consists of an element (19, 19a or 19b) which can be displaced in said hole (20 or 20a) of the armature (7, 7a) in an adjustable manner to overcome frictional sticking, is constructed essentially in a tubular manner and has a radially inwardly directed rim (22) which, on the one hand, forms a stop shoulder (23) for the closing piece holder (15) that is stressed by the valve closing spring (16 or 16a) and, on the other hand, is a stop for one end of the armature restoring spring (17).

2. Valve according to Claim 1, characterised in that the element (19, 19a or 19b) is constructed as a deep-drawn part.

3. Valve according to Claim 1 or 2, characterised in that the element (19) has a constriction (21), into which the one end of the armature restoring spring (17) dips, in the region of the stop shoulder (23).

4. Valve according to one of Claims 1 to 3, characterised in that the length of the tubular element (19, 19a or 19b) is greater than half its diameter.

5. Valve according to Claim 1, characterised in that the cylindrical hole (20) extends over the entire length of the armature (7a), and in that a second tubular element (19b) is pressed into the armature (7a) such that both closing piece holders (11a, 15a) are located, with the valve closing spring (16a), between the tubular elements (19a, 19b).


**Revendications**

1) Valve (2, 2a) ave un électro-aimant (4), avec une armature (7, 7a) orientée de façon mobile dans le sens de son axe longitudinal, armature qui est percée d'un alésage sur toute sa longueur, avec un premier siège de valve (8) orienté de façon à avoir le même axe par rapport à l'armature (7, 7a) ainsi qu'une première pièce de fermeture correspondante (10, 10a) et avec une première pièce de maintien (11, 11a) de la pièce de fermeture, pièce de maintien qui peut être déplacée dans le sens longitudinal de l'électro-aimant (4) au moyen de l'armature (7, 7a), avec un deuxième siège de valve (12, 12a) ainsi qu'une deuxième pièce de fermeture correspondante (14, 14a) et avec une deuxième pièce de maintien (15, 15a) de pièce de fermeture, qui peut également être déplacée dans le sens longitudinal de l'électro-aimant (4) au moyen de l'armature (7, 7a), avec un ressort de fermeture de la valve (16 ou 16a) monté avec une précompression entre les pièces de maintien (11, 15 ou 11a, 15a) des pièces de fermeture, avec un dispositif (19, 19a ou 19b), qui maintient la précompression du ressort de fermeture de valve (16 ou 16a) et avec au moins un ressort de rappel de l'armature précomprimé (17, 18), qui pénètre dans un alésage cylindrique (20 ou 20a) de l'armature (7, 7a), alésage s'étendant dans son sens longitudinal, valve caractérisée en ce que le dispositif (19, 19a ou 19b) consiste en un élément (19, 19a ou 19b) pouvant être réglé par déplacement dans cet alésage (20 ou 20a) de l'armature (7, 7a) en surmontant un entraînement à friction, élément qui est essentiellement de type tubulaire et a à une extrémité un bord (22) dirigé radialement vers l'intérieur, qui d'une part forme un épaulement de butée (23) pour la pièce de maintien (15) de la pièce de fermeture comprimée par le ressort de fermeture de la valve (16 ou 16a) et d'autre part est une butée pour une extrémité du ressort de rappel de l'armature (17).

2) Valve selon la revendication 1, caractérisée en ce que l'élément (19, 19a ou 19b) est formé comme une pièce d'emboutissage.

3) Valve selon la revendication 1 ou 2, caractérisée en ce que l'élément (19) a un rétrécissement (21) dans la zone de l'épaulement de butée (23), dans lequel plonge une extrémité du ressort de rappel de l'armature (17).

4) Valve selon l'une des revendications 1 à 3, caractérisée en ce que la longueur de l'élément de type tubulaire (19, 19a ou 19b) est plus grande que la moitié de son diamètre.

5) Valve selon la revendication 1, caractérisée en ce que l'alésage cylindrique (20) s'étend sur toute la longueur de l'armature (7a) et en ce qu'un deuxième élément (19b) de type tubulaire est enfoncé à la presse dans l'armature de telle sorte que les deux pièces de maintien (11a, 15a) des pièces de fermeture se trouvent avec le ressort de fermeture de valve (16a) entre les éléments de type tubulaire (19a, 19b).

FIG. 1

FIG. 2